# EUROPEAN PATENT SPECIFICATION

(11) **EP 1 918 613 B1**
(45) Date of publication and mention of the grant of the patent: **20.01.2010**
(21) Application number: 07254256.6
(22) Date of filing: 26.10.2007
(51) Int. Cl.: F16H 57/04, F16H 59/72

(54) **Lubricant level control in vehicle driving head assemblies**
Schmiermittelstandregelung bei Antriebskopfanordnungen von Fahrzeugen
Moyen de commande de niveau de lubrifiant dans des ensembles de têtes d'entraînement de véhicule

(30) Priority: 26.10.2006 GB 0621351
(43) Date of publication of application: 07.05.2008
(73) Proprietor: Meritor Heavy Vehicle Systems Cameri SpA, Cameri (Novara) 28062 (IT)
(72) Inventor: Harrup, Clive, Cameri (Novara) 28062 (IT); Bassi, Marco, Cameri (Novara) 28062 (IT); Gianone, Roberto, Cameri (Novara) 28062 (IT)
(74) Representative: Chettle, Adrian John

(56) References cited:
- EP-A- 0 696 697
- EP-A- 0 980 995
- DE-A1- 10 034 561
- DE-A1- 10 359 505
- DE-A1-102005 007 386
- US-A- 5 209 399
- US-A1- 2003 098 147

## Description

The present invention relates to lubricant level control in vehicle driving head assemblies, more particularly, but not exclusively, to a method for reducing lubricant associated power losses in a driving head assembly of an automotive vehicle.

A conventional rear axle for an automotive vehicle incorporates a driving head assembly for transferring power from the vehicle drive shaft to the rear wheels, whilst allowing the wheels to rotate at different speeds as the vehicle is turning. Such an assembly is occasionally referred to in general terms as a differential.

A typical driving head assembly consists of a housing, often referred to as a carrier, in which there is mounted a rotatable ring gear, more commonly referred to as a crown wheel. The crown wheel is arranged in mesh with a pinion at the end of the vehicle drive shaft. Rotation of the drive shaft causes rotation of the crown wheel within the carrier, via the pinion.

The crown wheel is fixedly mounted about a casing for a set of differential gears, which include side gears operatively coupled to a pair of rear axle shafts extending from the carrier, generally perpendicular to the drive shaft. As the crown wheel rotates, the differential side gears are configured to enable the rear axle shafts to rotate at different speeds when the vehicle is cornering.

A volume of lubricant is usually provided in the carrier, for cooling purposes and reducing wear. In use, lubricant is picked up by the rotating crown wheel and thrown forward in the direction of the pinion. However, the rotation of the crown wheel and the casing through the lubricant can lead to losses in power transmission, thereby increasing the overall fuel consumption of the vehicle.

Clearly, there is an environmental and economic need to reduce vehicle fuel consumption, and it is therefore an object of the invention to provide an assembly which reduces the level of lubricant related power losses referred to above.

A device for reducing lubricant related losses in a driving head assembly is described and illustrated in US 6,299,561. Walls project from a lower wall of the carrier, one arranged on either side of the crown wheel, to form what is referred to as a "dam area" around the lower end of the crown wheel. As the crown wheel and casing rotate, lubricant in the dam area is splashed over the walls, thereby reducing the level of lubricant in contact with the crown wheel and casing. The reduction in lubricant level leads to a reduction in shear or churning losses caused by the movement of the crown wheel and casing through the lubricant. Gate valves are provided in the walls to control the return of lubricant to the dam area between the walls. The flow of lubricant through the valves is controlled as a function of vehicle speed, whereby to minimise the level of lubricant in contact with the crown wheel at high rotational speeds.

EP0696697 which constitutes the closest prior art shows an alternative method of controlling a lubricant level in a transmission.

It is an object of the invention to provide an improved method for reducing lubricant related losses in a driving head assembly

Thus according to the present invention there is provided a method as defined in the accompanying independent claim 1.

A lubricant level control housing or shield may be configured to be fitted around at least a portion of crown wheel in a vehicle driving head assembly, the shield defining a mouth into which at least an external portion of the crown wheel is intended to extend, to provide a cover for a portion of the crown wheel.

The use of a separate housing for mounting in a driving head assembly, as opposed to an integrally formed dam of the kind described in the prior art, is advantageous in that the housing can be fabricated independently of the carrier body, for example from sheet metal, and readily installed about the crown wheel, without significantly effecting the assembly process of the driving head assembly. The housing also has application as a retro-fit item.

In a preferred embodiment, the housing has an internal profile configured to match the general external profile of the crown wheel so as to define a working clearance between the internal surface of the housing and the crown wheel, in use. This form of close-fitting housing provides a greater, more responsive degree of lubricant level control than the simple walled construction of the prior art.

A temperature sensor may be provided for monitoring the temperature of lubricant adjacent the shield.

The carrier body preferably defines a horizontal datum extending through the major axis of rotation of the rear axle, and wherein the first part of the carrier body has an end face which defines a generally vertical plane relative to said horizontal datum, a circumferential portion of the crown wheel extending from the first portion in a plane which is perpendicular to said vertical plane, wherein the housing is secured on to said end face of the first part of the carrier body.

In one embodiment, the carrier body defines a horizontal datum extending through the major axis of rotation of the rear axle, and wherein the first part of the carrier body has an end face which defines a generally vertical plane relative to said horizontal datum, a circumferential portion of the crown wheel extending from the first portion in a plane which is perpendicular to said vertical plane, wherein the housing is configured to cover at least the lower half of the section of crown wheel extending from the first part of the carrier body, at least up to the level of the horizontal datum.

The housing may include an array of apertures provided above the level of said horizontal datum.

In a preferred embodiment, the control valve may be located in a lower region of the housing, for regulating the flow of lubricant into the control chamber.

A lubricant health sensor may also be provided, preferably in a lower region of the housing, for monitoring the temperature and/or viscous quality of the lubricant in the control chamber.

A heater may be provided for heating lubricant adjacent the housing.

Baffles or other flow preventing devices are preferably provided in the carrier body to prevent the flow of lubricant into the control chamber via the differential casing.

Other aspects and features of the invention will be readily apparent from the claims and the following description of preferred embodiments, made by way of example only, with reference to the accompanying Figures, in which:
Figure 1 is a schematic part cross-sectional perspective view through a portion of driving head assembly for an automotive vehicle, taken generally along the rear axle;
Figure 2 is a schematic cross sectional view of the driving head assembly in Figure 1 taken across the rear axle;
Figure 3 is a schematic perspective view of a front section of the driving head assembly in Figures 1 and 2, with a rear section of the driving head assembly removed;
Figure 4 shows a side view of the arrangement shown in Figure 3;
Figure 5 is a view similar to Figure 2 showing lubricant level within the assembly under stationary conditions;
Figure 6 is a view similar to Figure 5 showing lubricant levels within the assembly under an operative condition; and
Figure 7 is a schematic cross sectional view of the driving head assembly in Figure 6 taken across the rear axle.

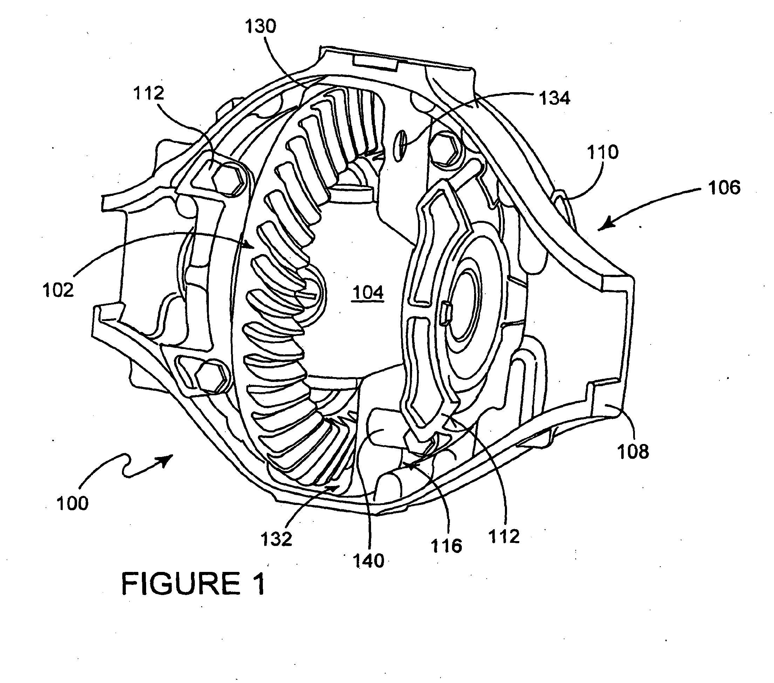

Referring firstly to Figures 1 to 2, part of a driving head assembly for a heavy goods vehicle is indicated generally at 100. A toothed crown wheel 102 is fixedly mounted on a differential gear casing 104, which includes a pair of opposing output ends 106 for two rear axle shafts of the vehicle (not shown).

The crown wheel 102 and casing 104 are rotatably mounted in a carrier having first and second portions 108, 110. The crown wheel 102 and casing 104 are rotatably supported on the second portion, via support rings 112. A major proportion of the crown wheel 102 and casing 104 are thereby encased in the first portion 108 of the carrier.

The carrier defines a major axis of rotation for the rear axle of the vehicle, generally left to right as viewed in Figure 1. The crown wheel 102 and casing 104 are concentric with said major axis.

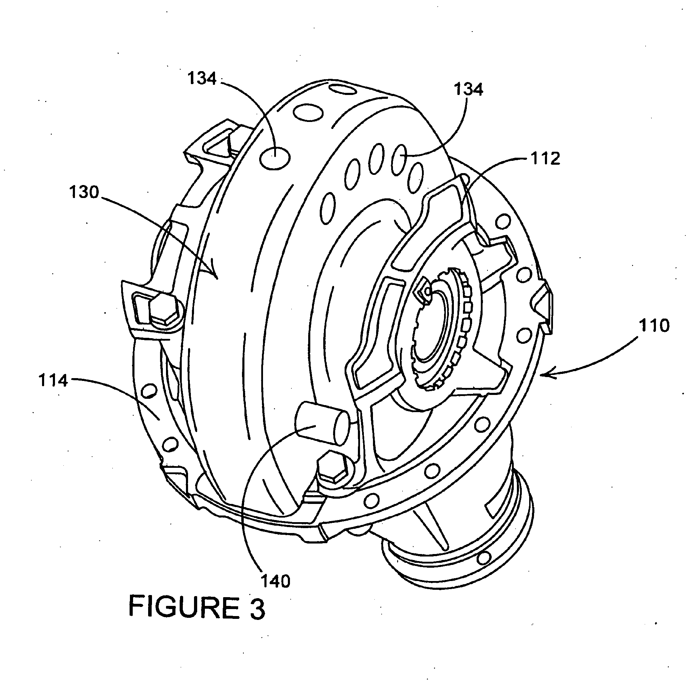

The second portion 110 of the carrier defines a generally annular end face 114, as can be seen most clearly in Figure 3. The first portion 108 of the carrier defines a similar end face, whereby the two end faces are intended to be secured together, for example using an annular weld or bolts, so as to define a main chamber 116 about the crown wheel 102 and casing 104.

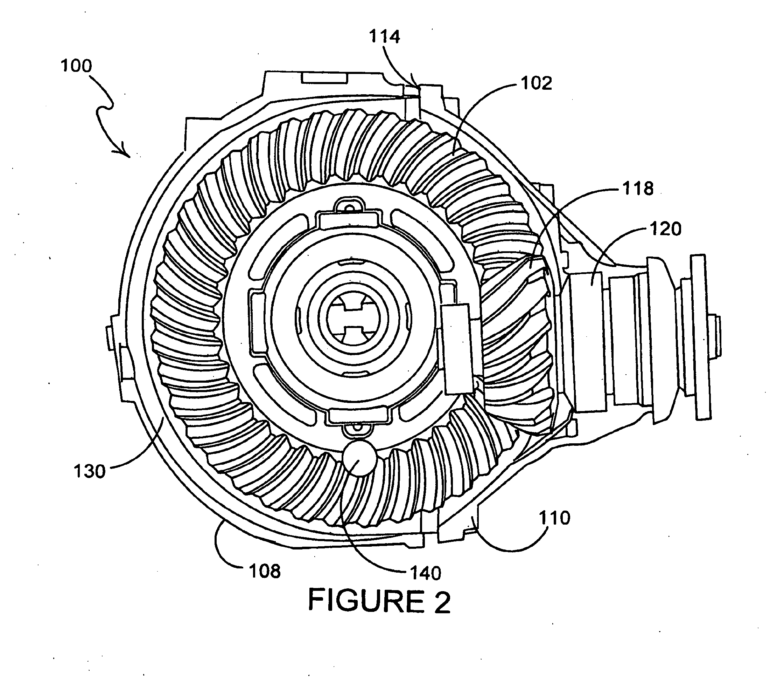

A pinion 118 is rotatable in a bearing 120 provided in the front end of the second portion 110 of the carrier, to the right as viewed in Figure 2. The pinion 118 forms the output end of an automotive drive shaft and is arranged in operative mesh with the crown wheel 102. The axis of rotation of the pinion 118 is offset from the major axis of the carrier, downwards as viewed in Figure 2.

A volume of lubricant (omitted from Figures 1 to 4 for clarity purposes) is contained in the carrier, for use in lubricating and cooling the internal components.

In use, the vehicle drive shaft (not shown) is used to rotate the pinion 118 in its bearing 120, which in turn causes rotation of the crown wheel 102. Automotive drive is thereby transmitted to the rear axle shafts via the driving head assembly 100. Differential gears inside the casing 104 are configured to enable the rear axle shafts to operate at different rotational speeds when the vehicle is not travelling in a straight line, for example.

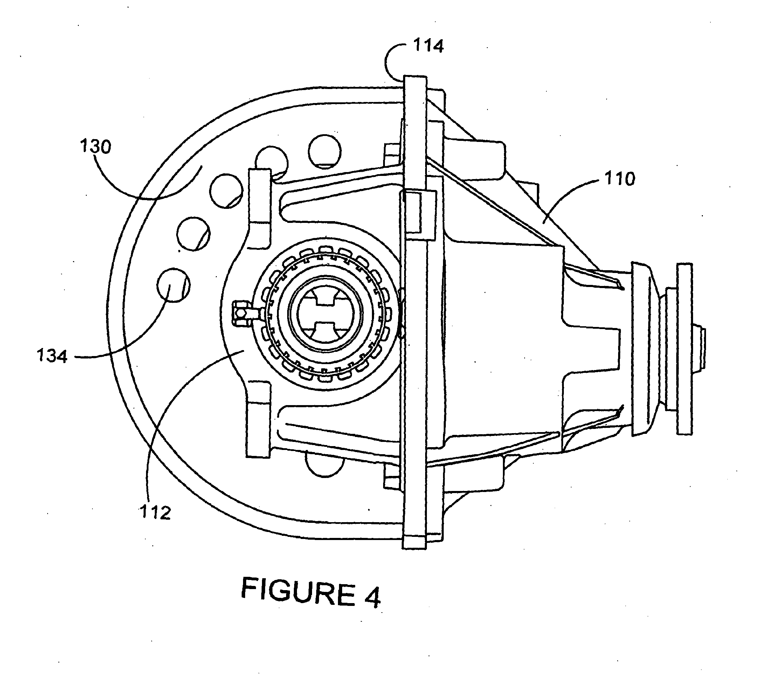

The driving head assembly 100 as thus far described is fairly conventional. However, as can be seen most clearly in Figures 3 and 4, a shield or housing 130 is fitted over the section of the crown wheel 102 which projects from the second portion 110 of the carrier. The housing 130 is sealingly secured onto the second portion 110 of the carrier, for example via bolts, so as to define a control chamber 132 inside the carrier.

It will be understood that the walls of the chamber act as a dam for isolating the crown wheel from the main body of lubricant in the carrier.

In the illustrated embodiment, the housing 132 is configured to cover a significant proportion of the crown wheel 102. A sector of the crown wheel, as defined by a chord arranged on one side of the axis of rotation of the differential casing 104, to the right as viewed in Figure 4, is not contained within the housing 130.

The internal shape of the housing 130 is configured to match the general external profile of the crown wheel 102, so as to minimise the free space in the control chamber 132 around the crown wheel 102. As such, it is preferred if only an operative clearance, for example 10 mm, is provided between the internal surface of the housing 130 and the crown wheel 102. A similar clearance is preferred between the internal surface of the housing 130 and the external surface of the casing 104.

Apertures 134 are provided in upper regions of the housing 130 above the operative axis of rotation of the pinion 118, and more particularly, above the operative centre line of the differential casing 104.

A control valve 140 is located in a lower region of the housing 130, generally in line with the axis of rotation of the crown wheel 102, for regulating the flow of lubricant between the second portion 110 of the carrier 106 and the control chamber 132. In this embodiment, a gate valve having a maximum valve aperture of 40 mm diameter extends through a side of the housing 130.

A lubricant health sensor (not illustrated) is also provided in the lower part of the housing 130, conveniently as part of the control valve 140, for monitoring the temperature and/or viscous quality of the lubricant in the control chamber 132. More preferably, however, the sensor should include a probe which is positioned adjacent the underside of the pinion 118 or the underside of the pinion bearing 120.

A control unit (not shown), preferably forming part of the vehicle management system, is arranged remote from and in communication with the control valve 140 and the sensor.

It should be noted that baffles or other flow preventing devices (not shown) are preferably provided in the carrier to prevent the flow of lubricant into the control chamber 132 via the rear axle shafts, i.e. into the differential casing 104, and vice versa.

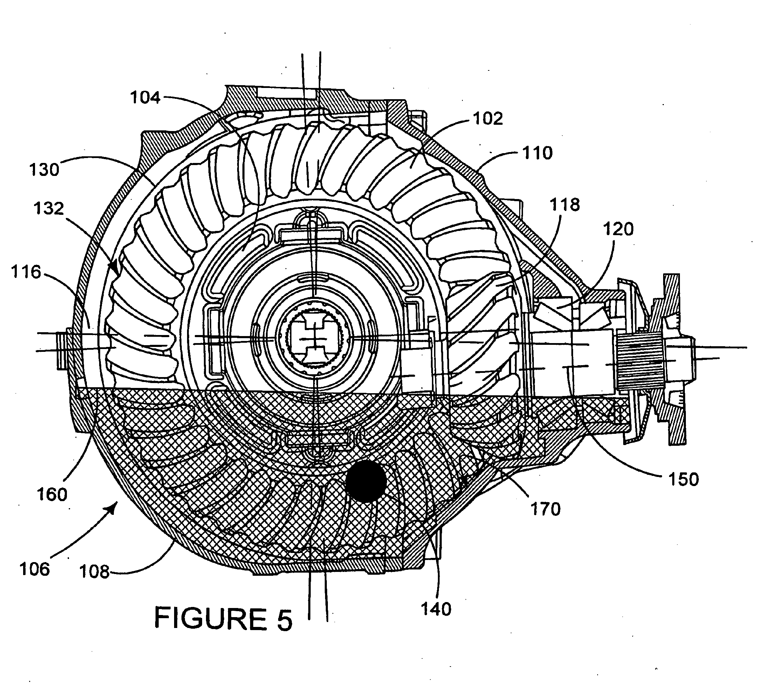

A typical operation of the driving head assembly 100 in use in an automotive vehicle will now be described with reference to Figures 5 to 7, in which the assembly 100 is generally inclined relative to the longitudinal axis of the vehicle, such that the operative axis of rotation of the pinion 118, as indicated at 150, is at a downward incline to a generally horizontal datum 152.

In Figure 5, the driving head assembly 100 is shown in a normal stationary condition with the control valve 140 in an open condition. That is to say, the vehicle drive shaft, and hence the pinion 118, crown wheel 102 and casing 104, are not rotating.

A volume of lubricant, in this embodiment 12 litres of high grade oil (indicated by shading), is provided in the carrier to a level indicated at 160, hereinafter referred to as the standing level. As can be seen, the standing level 160 maintains a volume of lubricant in contact with at least a lower portion of the pinion bearing 120 to provide cooling thereof. The control valve 140 is situated below the standing level 160, whereas the apertures 134 in the control housing 130 and the centre line of the differential casing 104 are above the standing level 160.

In use, the pinion 118 is rotated, which causes rotation of the crown wheel 102 and the casing 104, clockwise as viewed in Figure 5. Lubricant is thus picked up on the teeth of the crown wheel 102 and is thrown out of the control housing 130 in the direction of the pinion 118, from left to right as viewed in Figure 5, into the second portion 110 of the carrier. Rotation of the crown wheel 102 and casing 104 also causes churning of the lubricant in the control chamber 132, which results in a volume of lubricant being thrown out of the control housing 130 through the apertures 134 into the first portion 108 of the carrier. Lubricant thrown towards the pinion 118 is able to drip down onto an inclined return surface 170 provided below the pinion bearing 120. The return surface 170 is configured for re-circulating lubricant back into the second portion 110 of the carrier 106.

Under normal operating conditions, lubricant is expelled from the housing 130 in the manner described above. The low position of the valve aperture in the housing 130 ensures that a head of lubricant is maintained outside the housing 130 with respect to the level of lubricant in the control chamber 132. Hence, with the valve 140 in an open position, lubricant is able to flow through the valve 140 into the control chamber 132 (preferably maintaining the lubricant at or around the standing level 160 inside the chamber 132), so that there is a continual feed of lubricant for the pinion bearing 120.

However, during operation of the vehicle the control unit, housing 130 and control valve 140 can be used to significantly alter level of lubricant in contact with the crown wheel 102, as follows.

Under stationary conditions, i.e. when the crown wheel is not rotating, the control unit is programmed to hold the control valve 140 in an open position, so that the level of lubricant in the control chamber 132 corresponds to the level of lubricant outside the housing 130, i.e. the standing level 160 (Figure 5).

Under low torque steady state conditions, there is a lesser requirement to provide cooling and lubrication to the differential components than under high torque conditions. Hence, if the control unit determines that the vehicle is operating in a low torque steady state condition, the control unit is configured to close the control valve 140, to prevent or inhibit the return of lubricant to the control chamber 132 through the valve 140.

At high rotational speeds, lubricant is effectively pumped out of the control chamber 132 by the crown wheel 102, through the apertures 134 in control housing 130. Hence, the valve 140 can be used to starve the control chamber 132 of re-circulated lubricant.

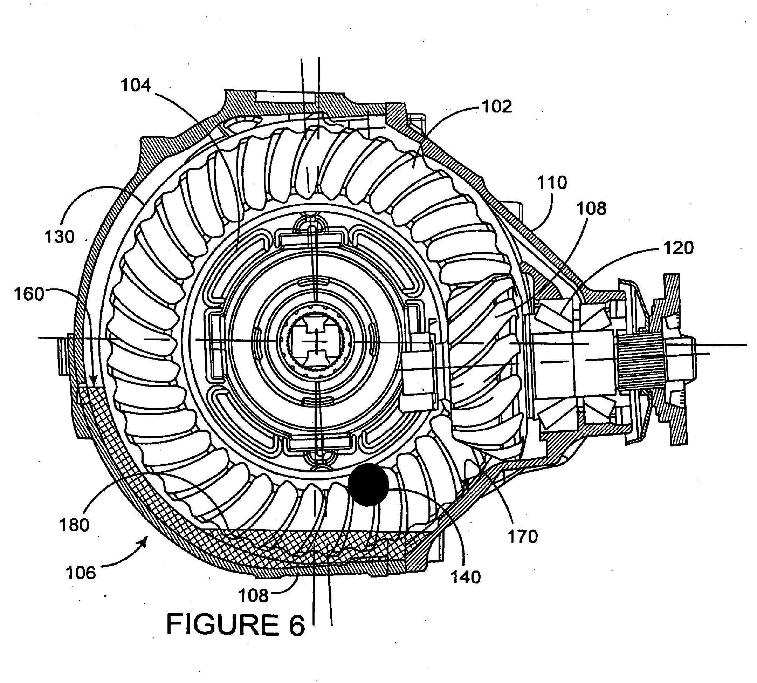

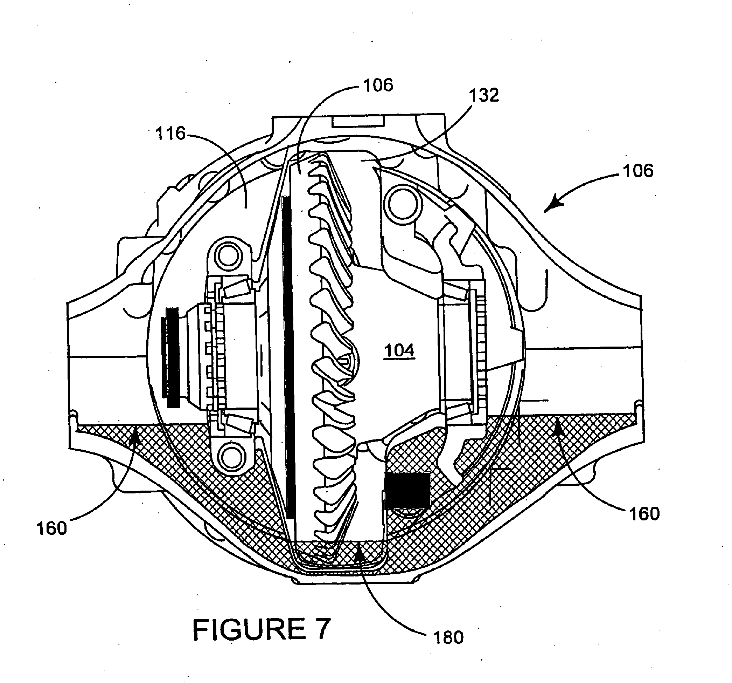

As the level of lubricant in the control chamber 132 diminishes, for example to the level indicated at 180 in Figures 6 and 7, the crown wheel 102 is able to rotate within the housing 130 in a substantially unhindered manner. Hence, power losses associated with the churning of the crown wheel and/or differential casing through lubricant are significantly reduced, thereby reducing the real-time fuel consumption of the vehicle.

The control unit is also configured to re-open the valve 140 if the health sensor detects that the temperature within the carrier exceeds a predetermined threshold, so as to enable lubricant to re-fill the control chamber 132 and provide maximum cooling within the control chamber 132, and more particularly for the pinion bearing 120.

If the control unit determines that the vehicle is operating in a high torque steady state condition, the control unit is configured to ensure that the valve 140 is opened or remains open, to equalise the levels of lubricant in the carrier (as shown in Figure 5), and thereby ensure adequate cooling and lubrication of the differential components under high demand conditions.

The control unit, control housing 130 and control valve 140 can therefore be used to optimise fuel consumption of the vehicle, dependent upon the operating conditions experienced by the assembly 100. The control unit, in communication with other control units in the vehicle (e.g. the engine management system, transmission control, retarder) is able to detect the load/speed conditions at which the driving head is working. Based on the working conditions of the driving head and input from the health sensor, the control unit can be configured to optimise the lubricant level in the housing to guarantee both a reduction of churning losses and adequate lubrication of the rotating parts.

Of course, for certain applications it may be preferable to allow the level of lubricant in the control chamber to drop below the level of the crown wheel 102, thereby removing substantially all standing lubricant, to optimise efficiency. A feed of lubricant back into the chamber 132 can then be achieved by controlling the valve 140 only when the pinion bearing 120 is at risk of overheating (i.e. due to a lack if sufficient lubricant).

It should be noted that the housing may be modified to suit particular requirements. For example, an open housing may be provided, thus avoiding the need for the apertures 134. For example, a top section of the housing 130 could be removed at a level above the operative axis of rotation of the pinion 118 in use, and more particularly above the operative centre line of the differential casing 104.

In general, dam walls on either side of the crown wheel are preferred, wherein the walls isolate at least the lower portion of the crown wheel from the main body of lubricant within the carrier are preferred. In use, rotation of the crown causes lubricant to splash or be thrown over the walls, thereby reducing the level of lubricant in the dammed region adjacent the crown wheel. These may be connected by a transverse wall extending beneath the crown wheel (e.g. In the manner of the shield described above) or may be separate from one another, e.g. individual upstanding from the carrier. A valve or other flow control means in at least one of the walls can then be operated to regulate the level of lubricant in the dammed region. The valve is controlled in response to temperature and/or vehicle driving conditions.

The valve itself may be temperature sensitive, thereby negating the need for a separate temperature sensor (e.g. the health sensor referred to above). Where a separate temperature sensor is used, this is preferably positioned adjacent the pinion bearing.

A heater (not shown) may also be provided in the carrier 106 to reduce the viscosity of the lubricant in low temperature environments. At all times or periodically, as required, the control unit may communicate with the health sensor to detect the temperature of the lubricant in the carrier. If the control unit determines that the temperature is too low, then the control unit can initiate power to the heater to raise the temperature to the required level, e.g. to keep the oil in a suitably fluid state, to further minimise churning losses associated with the crown wheel 102 and casing 104.

The shield and methods described above are applicable to all driving head assemblies, not only those for heavy goods vehicles.

## Claims

1. A method of controlling the level of lubricant-related losses in a driving head assembly (100) for an automotive vehicle, the driving head assembly (100) including a carrier body (108, 110), a crown wheel (102) and a differential casing (104) rotatably mounted within the carrier body, a lubricant chamber (132) around at least a portion of the external diameter of the crown wheel (102), a valve (140) in fluid communication with said lubricant chamber (132), and a control unit in operative communication with said valves (140), the method including the step of regulating the flow of lubricant through the valve (140) into said lubricant chamber (132) dependent upon the operative state of the crown wheel (102), **characterised in that** the valve (140) is closed to thereby starve the lubricant chamber (132) of lubricant if the control unit determines that the crown wheel (102) is operating under low torque conditions, and the valve (140) is opened to permit the flow of lubricant to said lubricant chamber (132) if the control unit determines that the crown wheel (102) is operating under high torque conditions, and the valve (140) is opened to flood the lubricant chamber (132) if the control unit determines that the temperature within the lubricant chamber (132) has exceeded a predetermined threshold.

2. The method of claim 1 whereby the lubricant chamber (132) is defined by a lubricant shield (130) configured to be fitted around at least a portion of the crown wheel (102) in the vehicle driving head assembly, the shield (130) defining a mouth into which at least an external portion of the crown wheel (102) is intended to extend, to provide a cover for a portion of the crown wheel (102), the shield (130) further including the valve.

3. The method of claim 2 wherein the shield (130) further includes a temperature sensor arranged for detecting the temperature of lubricant within the shield.

4. The method of claim 2 or 3 wherein the shield (130) has an internal profile configured to match the general external profile of the crown wheel (102) so as to define a working clearance between the internal surface of the housing and the crown wheel (102), in use.

5. The method of claim 2 or 3 or 4 wherein the shield (130) defines side walls configured to extend on either side of the crown wheel (102), the side walls being connected by a transverse portion configured to extend beneath a portion of the crown wheel (102).

6. The method of any one of claims 2 to 5 wherein the shield (130) includes one or more flanges to enable the shield to be bolted or otherwise secured to the driving head assembly (100).

7. The method of any one of claims 2 to 6 wherein the shield (130) is prefabricated from sheet material.

8. The method of any preceding claim further including a heater for heating lubricant adjacent the housing.

## Patentansprüche

1. Verfahren zur Regelung des Stands schmiermittelbezogener Verluste in einer Antriebskopfanordnung (100) für ein Kraftfahrzeug, wobei die Antriebskopfanordnung (100) einen Trägerkörper (108, 110), ein Tellerrad (102) und ein innerhalb des Trägerkörpers drehbar montiertes Differenzialgehäuse (104), eine um mindestens einen Abschnitt des Außendurchmessers des Tellerrads (102) herum angeordnete Schmiermittelkammer (132), ein in Fluidverbindung mit der Schmiermittelkammer (132) stehendes Ventil (140) sowie eine in betriebswirksamer Verbindung mit dem Ventil (140) stehende Regelungseinheit beinhaltet, wobei das Verfahren den Schritt des Regelns der Schmiermittelströmung durch das Ventil (140) in die Schmiermittelkammer (132) hinein in Abhängigkeit vom Betriebszustand des Tellerrads (102) einschließt, **dadurch gekennzeichnet, dass** das Ventil (140) geschlossen wird, um **dadurch** die Schmiermittelströmung zur Schmiermittelkammer (132) zu verknappen, wenn die Regelungseinheit bestimmt, dass das Tellerrad (102) gerade unter Niedrigdrehmomentbedingungen arbeitet, und dass das Ventil (140) geöffnet wird, um die Schmiermittelströmung zur Schmiermittelkammer (132) zuzulassen, wenn die Regelungseinheit bestimmt, dass das Tellerrad (102) gerade unter Hochdrehmomentbedingungen arbeitet, und dass das Ventil (140) geöffnet wird, um die Schmiermittelkammer (132) zu fluten, wenn die Regelungseinheit bestimmt, dass die Temperatur innerhalb der Schmiermittelkammer (132) einen vorbestimmten Grenzwert überschritten hat.

2. Verfahren nach Anspruch 1, bei dem die Schmiermittelkammer (132) durch eine Schmiermittelabschirmung (130) definiert ist, die so konfiguriert ist, dass sie um mindestens einen Abschnitt des Tellerrads (102) herum in der Antriebskopfanordnung eines Fahrzeugs angeordnet werden kann, wobei die Abschirmung (130) ein Mundstück definiert, in das hinein sich mindestens ein externer Abschnitt des Tellerrads (102) erstrecken kann, um so eine Abdeckung für einen Abschnitt des Tellerrads (102) bereitzustellen, wobei die Abschirmung (130) weiterhin das Ventil beinhaltet.

3. Verfahren nach Anspruch 2, bei dem die Abschirmung (130) weiterhin einen Temperatursensor beinhaltet, der vorgesehen ist, um die Schmiermitteltemperatur innerhalb der Abschirmung zu ermitteln.

4. Verfahren nach Anspruch 2 oder 3, bei dem die Abschirmung (130) ein Innenprofil hat, das so konfiguriert ist, dass es dem allgemeinen Außenprofil des Tellerrads (102) angepasst ist, um so einen Arbeitsabstand zwischen der Innenfläche des Gehäuses und dem Tellerrad (102) im Gebrauch zu definieren.

5. Verfahren nach Anspruch 2 oder 3 oder 4, bei dem die Abschirmung (130) Seitenwände definiert, die so konfiguriert sind, dass sie sich auf beiden Seiten des Tellerrads (102) erstrecken, wobei die Seitenwände durch einen quer verlaufenden Abschnitt verbunden sind, der so konfiguriert ist, dass er sich unterhalb eines Abschnitts des Tellerrads (102) erstreckt.

6. Verfahren nach einem der Ansprüche 2 bis 5, bei dem die Abschirmung (130) einen oder mehrere Flansche beinhaltet, so dass die Abschirmung mit der Antriebskopfanordnung (100) verschraubt oder anderweitig daran gesichert werden kann.

7. Verfahren nach einem der Ansprüche 2 bis 6, bei dem die Abschirmung (130) aus Blechmaterial vorgefertigt ist.

8. Verfahren nach einem der vorstehend aufgeführten Ansprüche, das weiterhin eine Heizvorrichtung zum Erwärmen von Schmiermittel angrenzend an das Gehäuse beinhaltet.

## Revendications

1. Procédé pour contrôler le niveau des pertes liées au lubrifiant dans un ensemble bloc d'entraînement (100) pour un véhicule automobile, cet ensemble bloc d'entraînement (100) comprenant un porte-différentiel (108, 110), une couronne de différentiel (102) et un carter de différentiel (104) monté de manière rotative dans le porte-différentiel, une chambre à lubrifiant (132) autour d'au moins une partie du diamètre extérieur de la couronne du différentiel (102), une soupape (140) en communication fluidique avec ladite chambre à lubrifiant (132) et un dispositif de commande en communication opérationnelle avec ladite soupape (140), ce procédé comprenant l'étape consistant à réguler l'écoulement de lubrifiant à travers la soupape (140) dans la chambre à lubrifiant (132) selon l'état opérationnel de la couronne du différentiel (102), **caractérisé en ce que** la soupape (140) est fermée pour priver ainsi la chambre à lubrifiant (132) de lubrifiant si le dispositif de commande détermine que la couronne du différentiel (102) fonctionne dans des conditions de faible couple et la soupape (140) est ouverte pour permettre l'écoulement de lubrifiant vers ladite chambre à lubrifiant (132) si le dispositif de commande détermine que la couronne du différentiel (102) fonctionne dans des conditions de fort couple, et la soupape (140) est ouverte pour inonder la chambre à lubrifiant (132) si le dispositif de commande détermine que la température à l'intérieur de la chambre à lubrifiant (132) a dépassé un seuil prédéterminé.

2. Procédé selon la revendication 1, selon lequel la chambre à lubrifiant (132) est définie par un bouclier pour lubrifiant (130) configuré de façon à être monté autour d'au moins une partie de la couronne du différentiel (102) dans l'ensemble bloc d'entraînement du véhicule, ce bouclier (130) définissant une ouverture dans laquelle au moins une partie externe de la couronne du différentiel (102) est supposée s'étendre, pour fournir un couvercle pour une partie de la couronne du différentiel (102), ce bouclier (130) comprenant en outre la soupape.

3. Procédé selon la revendication 2, dans lequel le bouclier (130) comprend en outre un capteur de température agencé de façon à détecter la température du lubrifiant à l'intérieur du bouclier.

4. Procédé selon la revendication 2 ou 3, dans lequel le bouclier (130) a un profil interne configuré de façon à être apparié au profil externe général de la couronne du différentiel (102) de façon à définir un jeu fonctionnel entre la surface interne du logement et la couronne du différentiel (102) en cours de fonctionnement.

5. Procédé selon la revendication 2 ou 3 ou 4, dans lequel le bouclier (130) définit des parois latérales configurées de façon à s'étendre de part et d'autre de la couronne du différentiel (102), ces parois latérales étant reliées par une partie transversale configurée de façon à s'étendre en dessous d'une partie de la couronne du différentiel (102) .

6. Procédé selon l'une quelconque des revendications 2 à 5, dans lequel le bouclier (130) comprend une ou plusieurs brides pour permettre au bouclier d'être boulonné ou fixé d'une autre façon à l'ensemble bloc d'entraînement (100).

7. Procédé selon l'une quelconque des revendications 2 à 6, dans lequel le bouclier (130) est préfabriqué à partir d'un matériau en tôle.

8. Procédé selon l'une quelconque des revendications précédentes comprenant un appareil de chauffage pour chauffer le lubrifiant adjacent au carter.
